# EUROPÄISCHE PATENTSCHRIFT

(11) **EP 0 947 663 B1**
(45) Veröffentlichungstag und Bekanntmachung des Hinweises auf die Patenterteilung: **22.06.2005**
(21) Anmeldenummer: 99106469.2
(22) Anmeldetag: 30.03.1999
(51) Int. Cl.: E21B 17/046, E21B 17/02, E21B 19/08, E21B 7/04, E21B 17/20, E21B 44/00, E21B 7/20, E21B 7/30, F16L 55/165

(54) **Vorrichtung zum statischen Erdbohren**
Apparatus for static earth boring
Dispositif pour le forage statique du sol

(30) Priorität: 30.03.1998 DE 19814232; 28.10.1998 DE 19849611
(43) Veröffentlichungstag der Anmeldung: 06.10.1999
(60) Teilanmeldung: 02025388.6
(73) Patentinhaber: Tracto-Technik Paul Schmidt Spezialmaschinen, 57368 Lennestadt (DE)
(72) Erfinder: Püttmann, Franz-Josef, 57368 Lennestadt (DE); Riekes, Andreas, 57392 Schmallenberg (DE); Prutti, Frank, 57368 Lennestadt (DE); Kaufmann, Bernhard, Dipl.-Ing., 57368 Lennestadt (DE)
(74) Vertreter: König, Reimar, Dr.-Ing.

(56) Entgegenhaltungen:
- EP-A- 0 526 743
- EP-A- 0 736 664
- EP-A- 0 794 315
- DE-A- 3 708 616
- FR-A- 819 203
- US-A- 4 522 273

## Beschreibung

Die Erfindung bezieht sich auf eine Vorrichtung zum statischen Herstellen oder Aufweiten von Erdbohrungen und/oder zum Zerstören alter Rohrleitungen, bei der ein Schüb-Zug-Antrieb über Kupplungsmittel an Vorsprüngen oder in Ausnehmungen eines Gestänges mit einem Werkzeug am Ende angreift.

Eine Bohrvorrichtung dieser Art ist in der europäischen Offenlegungsschrift 0 794 315 beschrieben. Sie besteht aus einer Lafette mit einer Hydraulik-Kolben-Zylinder-Einheit, die einen Schlitten linear hin- und herbewegt. Der Schlitten ist mit einer in vertikaler Richtung beweglichen Klinke verbunden, die beim Vorschub des Schlittens hinter eine Sprosse des Leitergestänges greift und so das Leitergestänge mit dem Bohrkopf entsprechend dem Hub der Hydraulik-Kolben-Zylinder-Einheit in Bohrrichtung vorwärts bewegt. Am Ende des Hubs löst sich die Klinke automatisch von der Sprosse und fährt der Schlitten in seine Ausgangsposition zurück. Währenddessen ist das Leitergestänge nicht fixiert und federt demgemäß unter dem Einfluß des auf den Bohrkopf am vorderen Ende des Leitergestänges wirkenden Erdreichs im allgemeinen ein mehr oder minder großes Stück zurück. Auf diese Weise verkürzt sich der Vorschub des Gestänges bei jedem Hub um ein von der Beschaffenheit des Erdreichs abhängiges mehr oder minder großes Stück. Da dies bei jedem Hub geschieht und beim Bohren über größere Entfernungen eine Vielzahl von Hüben erforderlich ist, führt das Zurückfedern zwangsläufig zu einem erheblichen Leistungsverlust. Darüber hinaus führt das Zurückfedern dazu, daß sich die Klinke und das Leitergestänge nicht mehr in der gegenseitigen Lage befinden, die gewährleistet, daß die Klinke zwischen zwei Sprossen des Leitergestänges greift. Das Gestänge und/oder die Klinke müssen dann zunächst gegeneinander verschoben werden, bis sich die Klinke genau über den Zwischenraum zwischen zwei Leitersprossen befindet.

Dieser Leistungsverlust macht sich nicht nur dann bemerkbar, wenn mit der Vorrichtung eine Bohrung erstellt wird, sondern auch dann, wenn am Ende beispielsweise einer Pilotbohrung der Bohrkopf durch einen Aufweit- bzw. Räumkopf ersetzt und dieser durch die Pilotbohrung zurück zur Startgrube gezogen wird; denn auch beim Aufweiten wirkt das Erdreich entgegen der Bewegungsrichtung des Aufweit- bzw. Räumkopfes auf das Zuggestänge und bewegt dieses beim Zurückfahren des Schlittens in seine Ausgangslage ein mehr oder minder großes Stück zurück.

Des weiteren ist aus der französischen Offenlegungsschrift 819 203 eine Bohrvorrichtung bekannt, bei der ein Schlitten auf Schienen verfahrbar gelagert und mit einem Ritzel versehen, dessen Zähne zwischen Querstäbe der Schienen greifen. Mit Hilfe eines Hebels und eines Gabelstücks mit einem zwischen die Zähne des Klinkenrads greifenden Bolzen läßt sich das Klinkenrad und damit der Schlitten auf den Schienen bewegen bzw. arretieren. Der Schlittenantrieb arbeitet nach Art einer Ratsche mit einer beim Zurückziehen des Schlittens über die Zähne des Ritzels schleifenden Sperrklinke.

Weiterhin beschreibt die europäische Patentschrift 0 736 664 ein Bohrgestänge, dessen Drehantrieb auf einem angetriebenen Schlitten angeordnet und über eine lösbare Kupplung in Gestalt zweier Spannköpfe mit dem Bohrgestänge verbunden ist.

Schließlich ist aus der deutschen Offenlegungsschrift 37 08 616 auch eine Anker-Bohrvorrichtung zum Senkrechtbohren bekannt, deren Bohrmaschine an einem Führungsarm angeordnet ist und mit einer Abstützung aus einem Teleskopzylinder in einem Gehäuse sowie einem die Bohrvorrichtung tragenden Stützfuß versehen ist.

Das der Erfindung zugrundeliegende Problem besteht daher darin, den Leistungsverlust infolge des erwähnten Zurückfedems des Gestänges beim Erstellen einer Bohrung mit einem Räumkopf und/oder beim Aufweiten einer Pilotbohrung oder auch beim zerstörenden Ersetzen einer im Erdreich verlegten Rohrleitung mit Hilfe eines Werkzeugs zu vermeiden.

Das Problem wird durch die unabhängigen Ansprüche gelöst. Vorteilhafte Ausführungsformen sind den Unteransprüchen zu entnehmen. Die Lösung des Problems besteht im einzelnen aus einer Vorrichtung mit einem Linearantrieb, einem damit in Antriebsverbindung stehenden Gestänge, mit einem Aufweit- und oder Zertrümmerungswerkzeug am Ende des Gestänges sowie einer ortsfesten Sperrklinke und einer mit dem Linearantrieb verbundenen Vorschubklinke, die jeweils abwechselnd am Gestänge angreifen, wobei die Vorschubklinke in Gestängeausnehmungen oder- vorsprüngen angreift und um eine Querachse in zwei Arbeitspositionen verschwenkbar ist.

Die Sperrklinke kann um etwa 180° verschwenkbar sein und demgemäß ihre Sperrwirkung in beiden Richtungen des Leitergestänges entfalten. Dies ist ohne weiteres möglich, wenn die Sperrklinke beispielsweise zwei winklig zueinander angeordnete Anschlagflächen besitzt, zwischen denen sich eine Anschlagnase erstreckt, mit der sich die Sperrklinke in der einen oder der anderen Richtung auf eine Leitersprosse abstützt.

Die Vorrichtung ist bei einer bevorzugten Ausführungsform mit mindestens zwei Schleppklinken, beispielsweise einer ortsfesten Sperrklinke und einer in Längsrichtung des Gestänges verfahrbaren, mit dem Schub- und Zugantrieb verbundenen Vorschubklinke jeweils mit zwei Wirkrichtungen versehen.

Auch diese Klinken können derart beispielsweise auf einer Schwenkachse angeordnet sein, daß sie sich um etwa 180° verschwenken lassen und demgemäß ihre Wirkung in beiden Richtungen des Gestänges entfalten. Dies ist ohne weiteres möglich, wenn die Klinken beispielsweise eine oder auch zwei winklig zueinander angeordnete Anschlagflächen besitzen, mit denen sie sich in der einen oder der anderen Richtung in eine kraft- bzw. formschlüssige Wirkverbindung mit dem Gestänge bringen lassen.

Auf diese Weise ist es möglich, das Gestänge im Schub- oder Zugbetrieb schrittweise mit Hilfe der Vorschubklinke vorwärts zu bewegen und nach jedem Bewegungsschritt mit Hilfe der ortsfesten Sperrklinke solange zu fixieren, bis der Linearantrieb mit der Vorschubklinke in seine Ausgangsstellung zurückgekehrt ist und die Vorschubklinke erneut in Wirkverbindung mit dem Gestänge kommt.

Um dies zu ermöglichen, können die Klinken so konturiert sein, daß sie jeweils mindestens eine Gleitfläche besitzen. Die Gleitfläche ermöglicht es, daß die Vorschubklinke während der Rückbewegung des Linearantriebs lose über das Gestänge, beispielsweise über die Sprossen eines Leitergestänges gleitet bzw. geschleppt wird, bis sie zu Beginn der Vorschubbewegung wieder in Wirkverbindung bzw. Eingriff mit dem Gestänge kommt. Andererseits gleitet die Sperrklinke während der Vorschubbewegung des Gestänges mit Hilfe ihrer Gleitfläche über das Gestänge, bis sie am Ende der Vorschubbewegung des Gestänges wiederum in Wirkverbindung bzw. Eingriff mit dem Gestänge kommt und das Gestänge vorübergehend arretiert. Auch hier findet eine Art Schleppbewegung statt.

Die Sperrklinke und gegebenenfalls auch die Vorschubklinke sollten sich in einer neutralen Stellung arretieren lassen, um das Gestänge ungehindert hin- und herverschieben zu können.

Im Zugbetrieb, beispielsweise wenn ein Aufweit- bzw. ein Räumkopf durch eine Pilotbohrung oder ein mit Schneidscheiben versehener Wagen oder ein Berstkopf zum Zerstören eines im Erdreich verlegten Leitungsrohrs durch ein im Erdreich verlegtes Leitungsrohr gezogen werden soll, um die Wandung der Leitung in Längsrichtung aufzuschlitzen, brauchen die beiden Klinken lediglich von Hand oder auch automatisch um etwa 180° verschwenkt zu werden, um in der in Zusammenhang mit dem Schubbetrieb bereits geschilderten Art und Weise abwechselnd in Wirkverbindung bzw. Eingriff mit dem Gestänge zu kommen.

Die Sperrklinke ist vorzugsweise gerätefest und die Vorschubklinke vorzugsweise an einem mit einem Linearantrieb verbundenen verfahrbaren Schlitten angeordnet. Als Linearantrieb kann ein doppelt wirkender Hydraulikzylinder dienen. Dabei können die beiden Zylinderräume mit einer Druckquelle über je eine Hydraulikleitung mit einem 3/4-Wegeventil verbunden sein, zwischen die ein Wechselventil mit einem den jeweils aktuellen Druck messenden Manometer geschaltet ist, das über ein Steuergerät beim Erreichen des maximalen Drucks das 3/4-Wegeventil schaltet und dabei die eine oder die andere Hydraulikleitung mit der Druckquelle verbindet.

Dies erlaubt einen automatischen Betrieb des Vorschubwagens, so daß nur noch zum Einlegen und Kuppeln der Gestängeabschnitte Handarbeit erforderlich ist. Des weiteren lassen sich Schäden vermeiden, wenn die Vorrichtung auf einen maximalen Einschub- und/oder Zugdruck eingestellt ist, so daß die Vorrichtung automatisch abgeschaltet wird, wenn sie auf ein unerwartetes Bodenhindernis trifft.

Wird mit Hilfe der erfindungsgemäßen Vorrichtung ein Schneidwagen und mit Abstand dahinter auch ein Aufweit- bzw. Räumkopf durch ein im Erdreich verlegtes Leitungsrohr gezogen, um das Leitungsrohr in Längsrichtung zunächst aufzuschlitzen, anschließend mit Hilfe des Aufweit- bzw. Räumkopfes zusammen mit dem umgebenden Erdreich aufzuweiten sowie gleichzeitig mit Hilfe des Aufweitkopfes ein neues Rohr in das Erdreich einzuziehen, dann kann es zu einer starken Biegebeanspruchung der Gestängeverbindung zwischen dem Schneidwagen und dem Aufweitkopf kommen.

Die Erfindung schafft hier Abhilfe in Gestalt einer Gelenkverbindung des Gestänges, beispielsweise aus mindestens drei Gelenkabschnitten, die über jeweils rechtwinklig zueinander verlaufende Schwenkachsen miteinander verbunden sind. Auf diese Weise ergibt sich insgesamt eine Art Kardangelenk, mit dessen Hilfe sich der Schneidwagen, der Räumkopf und die neue Rohrleitung problemlos in die von dem Räumkopf geschaffene Erdbohrung einziehen lassen. Andererseits können der Schneidwagen und der nachgezogene Räumkopf aber auch über eine Kette oder ein Seil beweglich miteinander verbunden sein.

Das Gestänge besteht vorzugsweise aus einzelnen Abschnitten, die sich über eine Steckkupplung miteinander verbinden lassen. Die Steckkupplung ist dabei so beschaffen, daß sie ein gewisses seitliches Spiel und demgemäß auch ein gelenktes Bohren entlang einer gebogenen Linie zuläßt. Dies ist möglich, weil sich das seitliche Spiel zwischen den einzelnen Gestängeabschnitten derart addiert, daß ein Bohren auf einer Kurvenbahn möglich ist, die einen Winkel von bis zu 90° überbrückt.

Der Rahmen der Vorrichtung ist vorzugsweise teleskopierbar und kann eine Stirnplatte besitzen, die über Holme im Rahmen geführt ist. Die Stirnplatte dient als Abstützung der Vorrichtung, wenn mit Hilfe des Gestänges der Räumkopf durch eine Pilotbohrung oder ein erdverlegtes Leitungsrohr in Richtung auf den Rahmen gezogen wird.

Die Stirnplatte kann mit einem Schieber versehen sein, der eine Öffnung in der Stirnplatte verschließt. Die Öffnung in der Stirnplatte bietet die Möglichkeit, daß der Räumkopf, nachdem er sich durch die Pilotbohrung oder ein erdverlegtes Leitungsrohr bewegt hat, das Erdreich vollständig verlassen kann; er tritt dabei zusammen mit dem gegebenenfalls vor ihm hergeschobenen Erdreich und Bruchstücken einer erdverlegten Rohrleitung in den Freiraum zwischen der Stirnplatte und dem Rahmen der Vorrichtung ein und läßt sich dort ohne Beeinträchtigung der von ihm geschaffenen Erdbohrung ohne weiteres von dem Gestänge und einem Nachziehrohr lösen.

Da mit dem Räumkopf üblicherweise gleichzeitig eine neue Rohrleitung in Gestalt eines Nachziehrohrs in die aufgeweitete Erdbohrung eingezogen wird, bedarf es einer Verbindung zwischen dem Räumkopf und dem vorderen Ende des Nachziehrohrs. Bei einem zu einem Bund gewickelten Nachziehrohr üblicherweise aus Polyäthylen ist es infolge der durch das Wickeln bewirkten Krümmung des Rohrendes und dessen starker Rückfederung schwierig, eine hinreichend sichere Verbindung mit dem Räumkopf herzustellen.

Die Erfindung schafft hier Abhilfe in Gestalt einer Gelenkverbindung aus mindestens drei Gelenkabschnitten, die über jeweils rechtwinklig zueinander verlaufende Schwenkachsen miteinander verbunden sind. Auf diese Weise ergibt sich insgesamt eine Art Kardangelenk, mit dessen Hilfe sich das vordere Rohrende problemlos in die von dem Räumkopf geschaffene Erdbohrung einziehen läßt.

Die Erfindung wird nachstehend anhand von in der Zeichnung dargestellten Ausführungsbeispielen des näheren erläutert. In der Zeichnung zeigen:

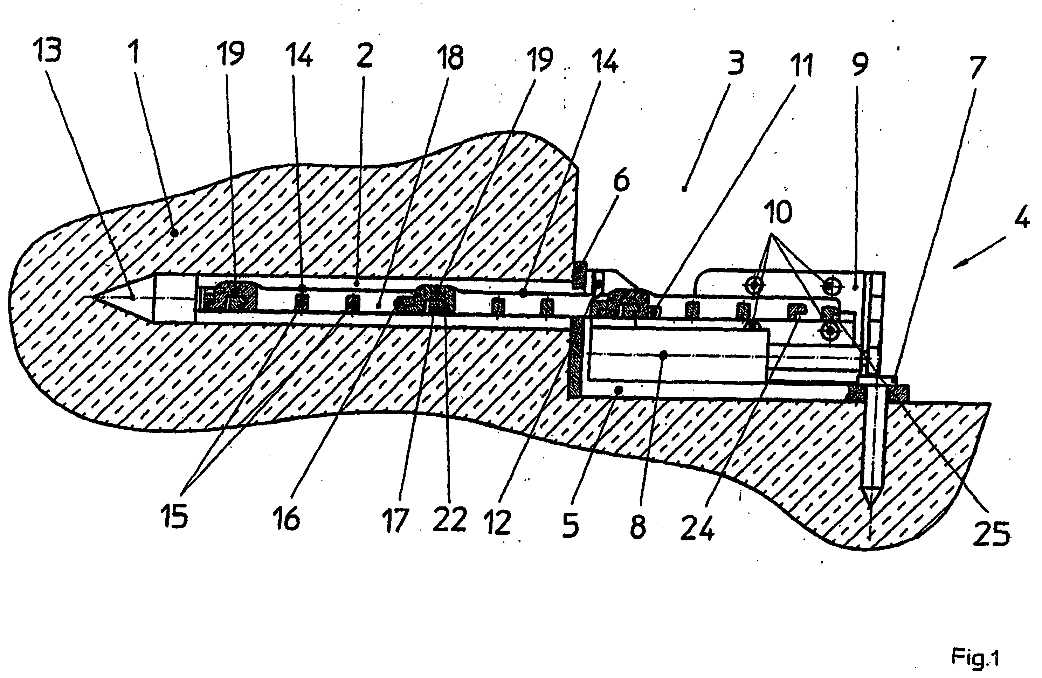

- Fig. 1: eine Bohrvorrichtung beim Erstellen einer Pilotbohrung
- Fig. 2: eine Gestängearretierung in Gestalt einer einfach wirkenden Sperrklinke,

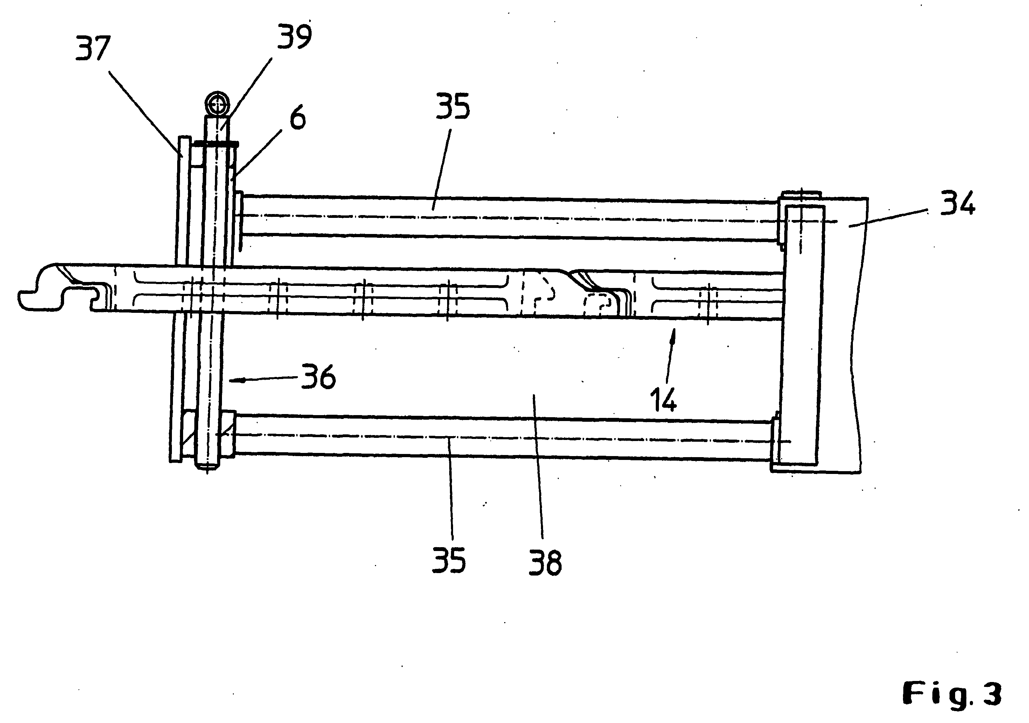

- Fig. 3: einen teleskopierbaren Rahmen und
- Fig. 4: eine kardanische Verbindung in einer Seitenansicht und
- Fig. 5: in einer Draufsicht;
- Fig. 6: die Bohrvorrichtung beim Erstellen einer Pilotbohrung,
- Fig. 7: das Gestänge der Bohrvorrichtung nach Fig. 1 mit dem Schub- und Zugantrieb sowie den beiden Klinken in der Schlußphase der Rückwärtsbewegung im Schubbetrieb,
- Fig. 8: das Gestänge und den Antrieb am Ende der Vorschubbewegung,
- Fig. 9: das Verschwenken der Klinken beim Übergang vom Schub- in den Zugbetrieb,
- Fig. 10: eine Draufsicht auf einen Gestängeabschnitt mit Vorsprüngen und einer Klauenklinke,
- Fig. 11: eine Seitenansicht des Gestängeabschnitts der Fig. 10,
- Fig. 12: einen Schnitt nach der Linie VII-VII in Fig. 11,
- Fig. 13: einen kardanischen Gestängeabschnitt in einer Seitenansicht,
- Fig. 14: eine Draufsicht auf den Gestängeabschnitt der Fig. 13,
- Fig. 15: einen Schaltplan zum automatischen Steuern des Linearantriebs für den Klinkenschlitten und

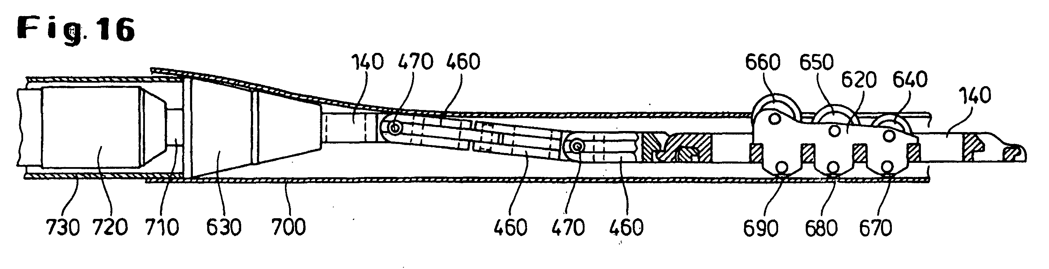

- Fig. 16: einen Schneidscheibenwagen mit einem nachgezogenen Aufweitkopf.

Mittels der erfindungsgemäßen Vorrichtung wird, ausgehend von einer Startgrube 3 statisch eine Bohrung 2 in das Erdreich 1 getrieben. Zu diesem Zweck befindet sich in der Startgrube 3 ein Schub-Zug-Antrieb 4. Seine stillstehende Lafette 5 stützt sich mittels einer Stirnplatte 6 an der in Vortriebsrichtung befindlichen Wand des Erdreichs 1 ab und wird mittels eines oder mehrerer Bodenanker 7 gehalten. An der Lafette 5 ist eine Hydraulik-Kolben-Zylinder-Einheit 8 angeordnet, die einen Schlitten 9 hin- und herbewegt. Föhrungsbolzenpaare 10 im Schlitten 9 dienen dazu, Abschnitte 14 eines Bohrgestänges zu führen. Weitere Gestängeabschnitte 14 sind mit dem im Schlitten 9 gehaltenen Gestängeabschnitt 14 über eine Steckkupplung verbunden.

Die Gestängeabschnitte 14 bestehen leiterartig aus Sprossen 15 und Parallelholmen 18.

Am Ende eines jeden Gestängeabschnitts 14 befindet sich ein Kupplungskopf 19, der mit der vorletzten Sprosse und der letzten Sprosse 17 des benachbarten Gestängeabschnitts 14 zusammenwirkt. Der Kupplungskopf 19 ist mit einer Ausnehmung 20 versehen, welche die letzte Sprosse 17 übergreift, während eine Nase 21 am Kupplungskopf 19 in einen Ausschnitt 24 der vorletzten Sprosse 16 eingreift und eine Nase 22 in einen Ausschnitt 25 in der letzten Sprosse 17 eingreift. Der Kupplungskopf ist dabei so dimensioniert, daß die Verbindung zwischen benachbarten Gestängeabschnitten 14 ein gewisses Spiel besitzt, das eine Gestängebewegung entlang einer gekrümmten Bahn erlaubt.

Beim Herstellen einer Erdbohrung 2 durch Einpressen des aus einzelnen Abschnitten 14 bestehenden Gestänges mit dem Bohrkopf 13 in das Erdreich dient eine Arretierung 12 dazu, das Gestänge axial zu fixieren, wenn der Schlitten nach Vollendung seines Vorwärtshubes in seiner Ausgangslage zurückkehrt.

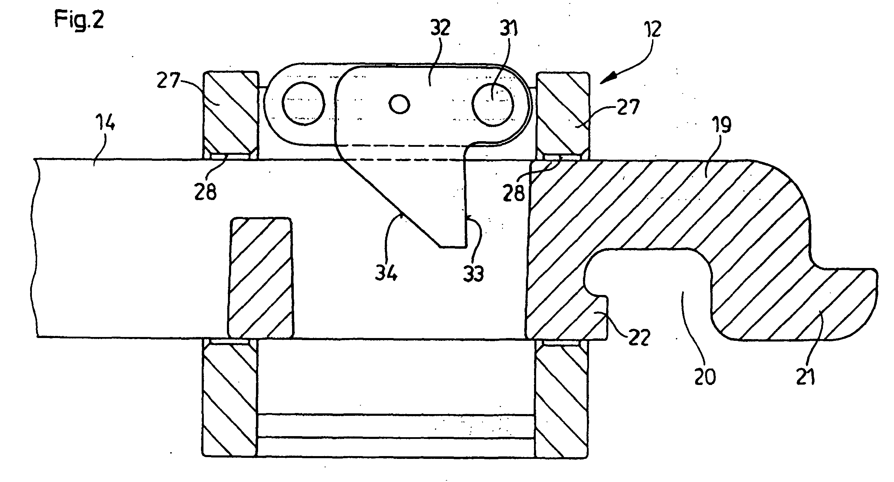

Die Gestängearretierung 12 besteht, wie in Fig. 2 dargestellt, aus einem Rahmen mit zwei jeweils eine Öffnung 28 für das Gestänge aufweisenden Platten 27 und besitzt eine auf einer Achse 31 verschwenkbar gelagerte Sperrklinke 32, deren Anschlagkante 33 sich arretierend gegen eine Gestängesprosse legt, während eine Schräge 34 der Sperrklinke 32 über die Sprossen gleitet.

Im Rahmen 34 des Schub-Zug-Antriebs 4 ist an den Eckpunkten eines Vierecks jeweils ein Holm 35 linear beweglich geführt. Die Holme 35 tragen die Stirnplatte 6, in der sich eine Öffnung 36 befindet. Diese Öffnung ist mit Hilfe eines Schiebers 37 verschlossen und erlaubt den Durchtritt eines durch eine Pilotbohrung oder ein erdverlegtes Altrohr gezogenen Räumkopfs in den Freiraum 38 zwischen der Stirnplatte 6 und dem Rahmen 34. In diesem Freiraum läßt sich der Räumkopf ohne besondere Schwierigkeiten von dem Gestänge 14 und von einem von ihm in das Erdreich eingezogenen Neurohr trennen, das dann mit einem gewissen Überstand aus dem Erdreich herausragt und sich daher mühelos mit einem sich anschließenden Neurohr verbinden läßt.

Die Stirnplatte läßt sich nach dem Einstecken eines Bolzens 39 zwischen zwei Sprossen problemlos mit Hilfe des Gestänges 14 ausfahren.

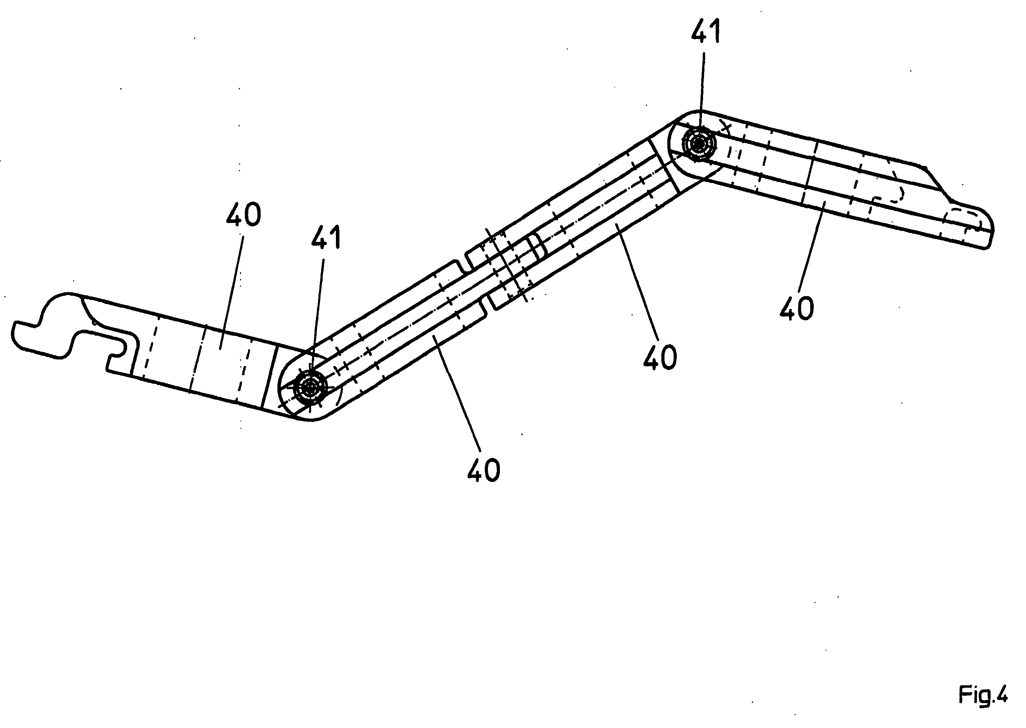

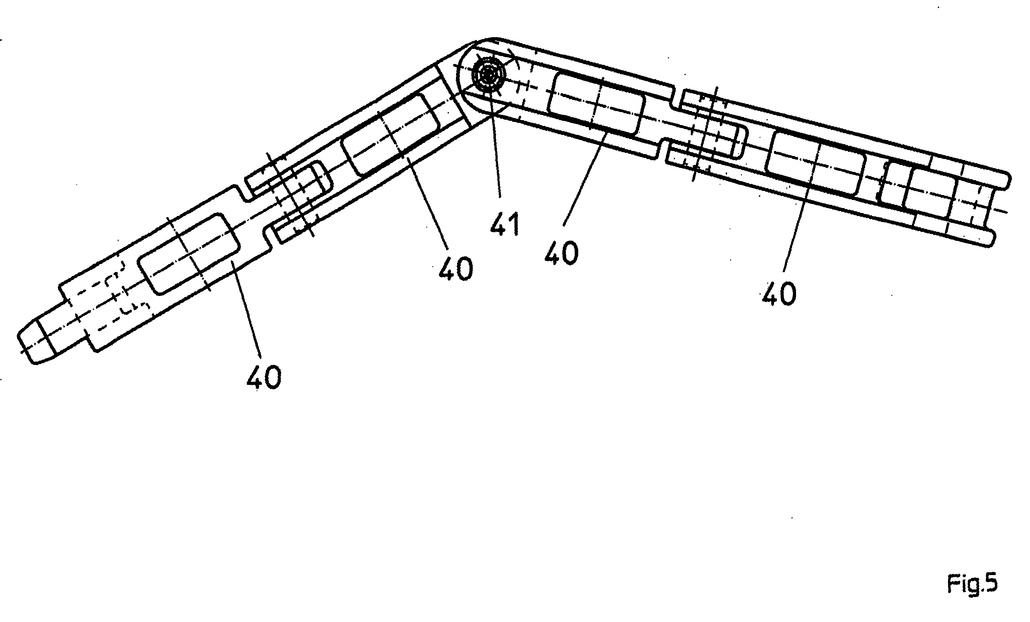

Das Einziehen des Neurohrs geschieht mit Hilfe einer Verbindung aus mindestens drei Gestängeabschnitten 40, die über jeweils in einem Winkel von 90° zueinander verlaufende Schwenkachsen 41 miteinander verbunden sind (Fig. 4, 5). Auf diese Weise ergibt sich eine kardanische Verbindung zwischen dem Neurohr und dem Räumkopf, die das Einziehen des vorderen Rohrendes in die von dem Räumkopf geschaffene Erdbohrung wesentlich erleichtert.

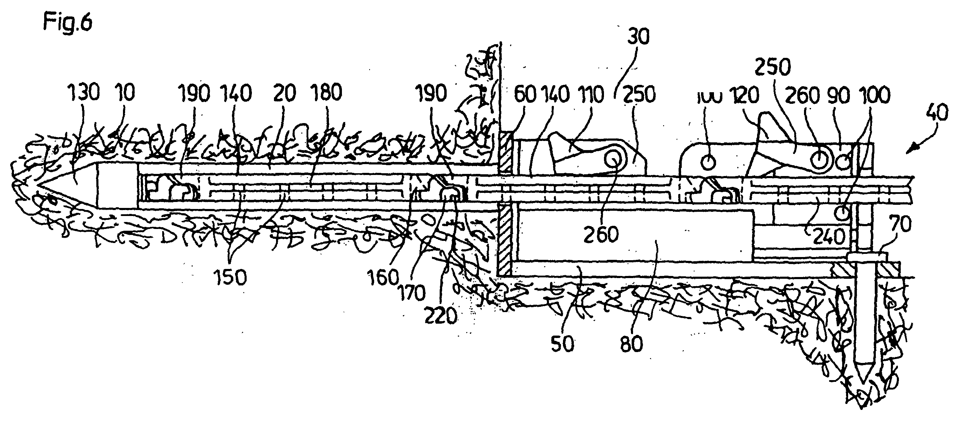

Im folgenden wird ein weiteres, in Fig. 6 dargestelltes Ausführungsbeispiel der Erfindung beschrieben.

Mittels der erfindungsgemäßen Vorrichtung wird, ausgehend von einer Startgrube 30 statisch eine Bohrung 20 in das Erdreich 10 getrieben. Zu diesem Zweck befindet sich in der Startgrube 30 ein Schub-Zug-Antrieb 40. Dessen stillstehende Lafette 50 stützt sich mittels einer Stirnplatte 60 an der in Vortriebsrichtung befindlichen Wand der Startgrube 30 ab und wird mittels eines oder mehrerer Bodenanker 70 gehalten. An der Lafette 50 ist ein Linearantrieb in Gestalt einer Hydraulik-Kolben-Zylinder-Einheit 80 angeordnet, die einen Schlitten 90 hin- und herbewegt. Führungsbolzenpaare 100 im Schlitten 9 und Klinken 110,120 dienen dazu, Abschnitte 140 eines Bohrgestänges zu führen und zu bewegen. Die Gestängeabschnitte 140 sind mit dem im Schlitten 90 gehaltenen Gestängeabschnitt 140 über eine Steckkupplung verbunden.

Die Gestängeabschnitte 140 bestehen leiterartig aus Sprossen 150 und Parallelholmen 180.

Am Ende eines jeden Gestängeabschnitts 140 befindet sich ein Kupplungskopf 190, der mit der vorletzten Sprosse 160 und der letzten Sprosse 170 des benachbarten Gestängeabschnitts 140 zusammenwirkt. Der Kupplungskopf 190 ist mit einer Ausnehmung 200 versehen, welche die letzte Sprosse 170 übergreift, während eine Nase 210 am Kupplungskopf 190 in einen Ausschnitt 240 der vorletzten Sprosse 16 und eine Nase 220 in einen Ausschnitt an der letzten Sprosse 170 eingreift. Der Kupplungskopf ist dabei so dimensioniert, daß die Verbindung zwischen benachbarten Gestängeabschnitten 140 ein gewisses Spiel besitzt, das eine Gestängebewegung entlang einer gekrümmten Bahn erlaubt.

Beim Herstellen einer Erdbohrung 20 durch schrittweises Einpressen des aus einzelnen Abschnitten 140 bestehenden Gestänges mit Hilfe eines Werkzeugs in Gestalt eines Bohrkopfs 130 in das Erdreich dient eine nur schematisch dargestellte Sperrklinke 11 dazu, das Gestänge in Längsrichtung zu fixieren, wenn der Schlitten 90 nach Vollendung seines Vorwärtshubs in seine Ausgangslage zurückkehrt.

Die Sperrklinke 110 ist ortsfest an einem Ausleger 250 der Lafette 50 angeordnet und besteht aus einem auf einer Querachse 260 drehbar gelagerten Schwenkarm 270 mit zwei mittig angeordneten Flügeln 280, 290. Der Schwenkarm 270 übergreift das Leitergestänge 140 quer zur Gestängeachse und besitzt zwei einander gegenüberliegende Anschlagflächen 300,310, während die Flügel 280,290 der in der Seitenansicht etwa Y-förmig ausgebildeten Sperrklinke 110 stirnseitig mit Anschlagflächen 320,330 sowie mit Gleitflächen 340,350 versehen sind.

Der Vorschubschlitten 90 ist mit einer der Sperrklinke 110 konstruktiv entsprechenden Vorschubklinke 120 ausgestattet.

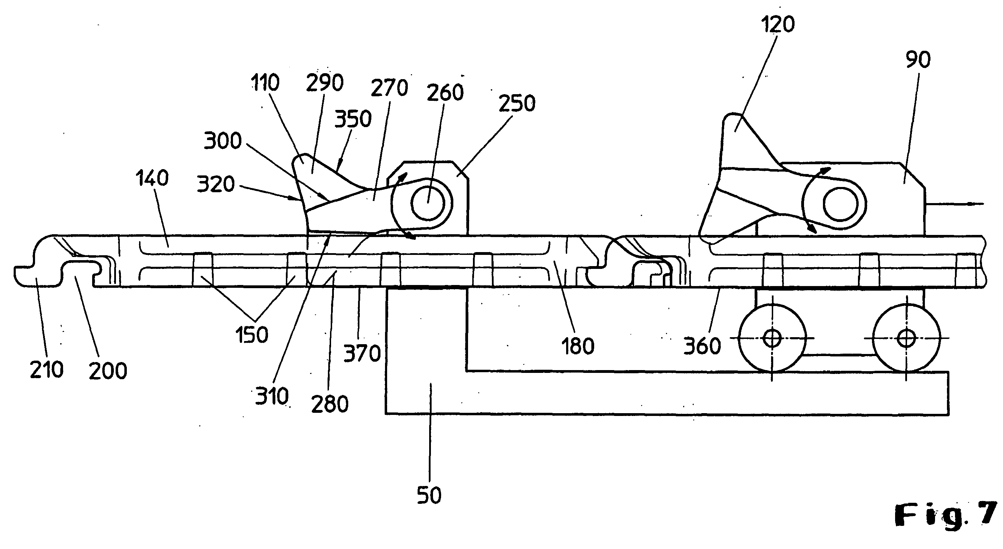

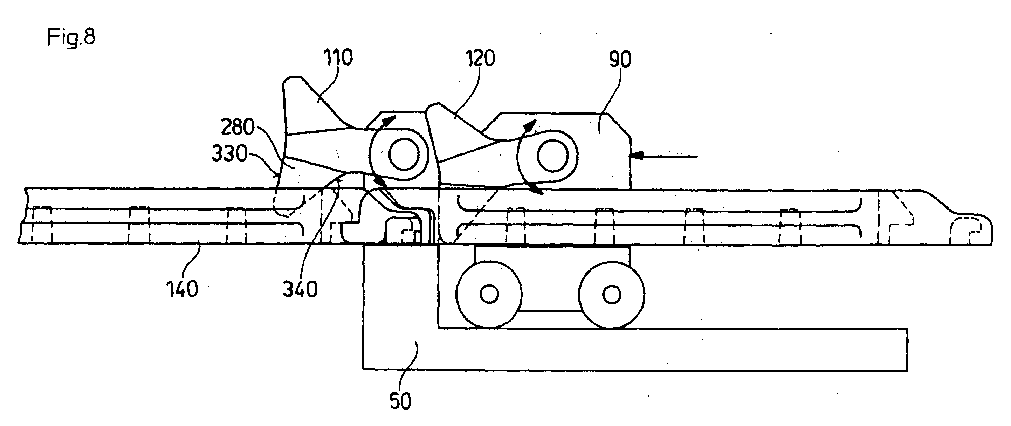

Wie sich aus der Darstellung in Fig. 7 ergibt, befindet sich die Sperrklinke 110 dadurch in Wirkverbindung mit dem Gestängeabschnitt 140, daß ihre Anschlagfläche 330 an einer Sprosse 150 anliegt. Auf diese Weise ist das Gestänge während der Rückbewegung des Schlittens 90 an einer Bewegung in Richtung der Schlittenbewegung gehindert, d.h. arretiert. Während der Rückbewegung des Schlittens 90 überfährt die Vorschubklinke 120 die Gestängesprossen 150 nacheinander in der Weise, daß die Gleitfläche 340 über die einzelnen Sprossen gleitet, bis der Schlitten 90 seine Ausgangsstellung erreicht hat und der Flügel 280 der Vorschubklinke 120 unter dem Einfluß der Schwerkraft in das Fenster 360 zwischen den Sprossen 150 und den Holmen 180 des Gestänges fällt. Bei einer Bewegungsumkehr des Schlittens 90, d.h. bei der Vorschubbewegung - in Richtung nach links in Fig. 7 - trifft die Anschlagfläche 330 der Vorschubklinke 120 auf die vor ihr befindliche Sprosse 150, womit der Vorschubschlitten 90 infolge der leicht V-förmig angeordneten Anschlagflächen 320,330 kraft- und formschlüssig mit dem Leitergestänge gekuppelt ist, so daß sich das Leitergestänge aus seiner in Fig. 7 dargestellten Lage in die in Fig. 8 dargestellte Lage am Ende des Vorschubs bewegt. Während dieser Bewegung gleitet die Sperrklinke 110 mit ihrer Gleitfläche 340 über die Sprossen 150 hinweg, bis sie unter dem Einfluß der Schwerkraft am Ende des Vorwärtshubs mit ihren Flügeln 280 in das unter ihr befindliche Fenster fällt und die beiderseitigen Anschlagflächen 310 auf die Holme 180 treffen.

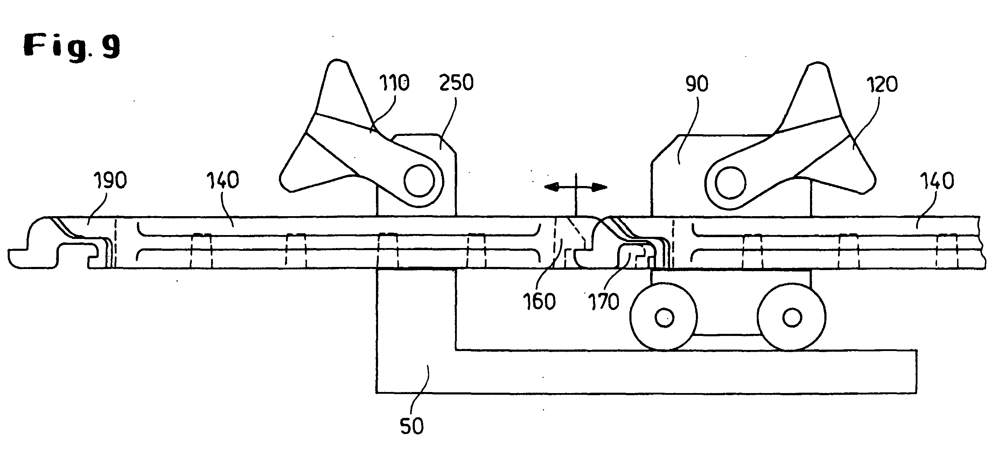

In Fig. 9 ist dargestellt, wie die Bohrvorrichtung vom Schubbetrieb (Fig. 2) auf Zugbetrieb umgestellt wird. Dazu brauchen lediglich die Sperrklinke 110 und die Vorschubklinke 120 aus ihrer in den Fig. 7, 8 dargestellten Lage um etwa 180° verschwenkt zu werden, um das Gestänge dann in der entgegengesetzten Richtung zu bewegen bzw. zu arretieren. Dies geschieht in der gleichen Weise wie beim Schubbetrieb, jedoch mit dem Unterschied, daß nunmehr die Flügel 290 sowie die Anschlagflächen 300 und 320 zur Wirkung kommen.

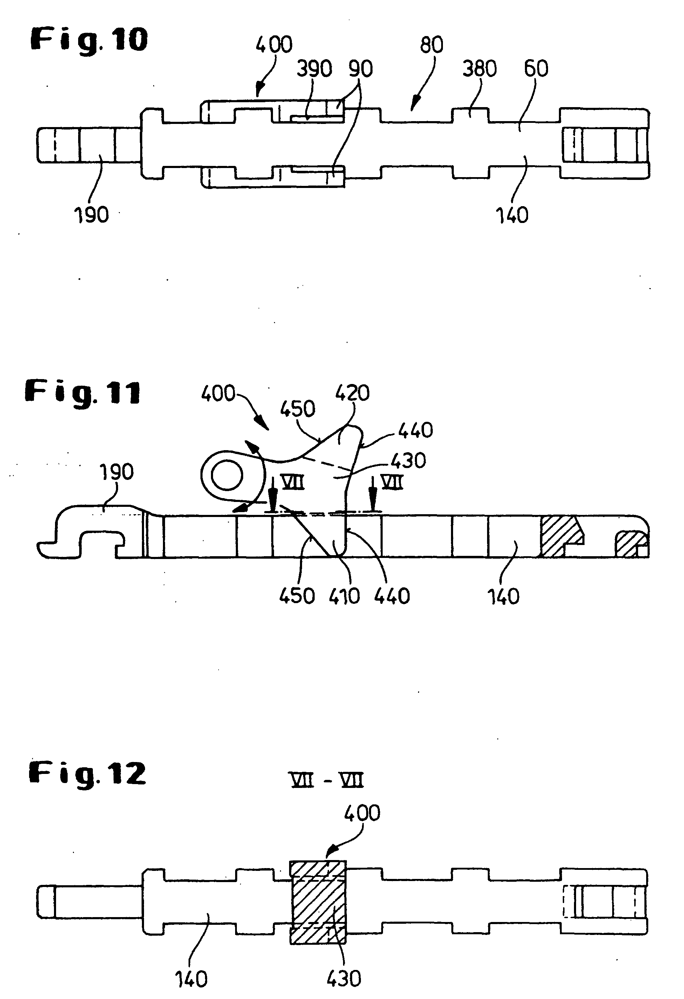

Das Gestänge kann auch entsprechend den Darstellungen in den Fig. 10 bis 12 mit einander paarweise gegenüberliegenden Vorsprüngen 380 versehen sein, an denen mit einem klauenartigen Maul 390 ausgestattete Klinken 400 angreifen. In diesem Fall besitzen die Klinken 400 vier Flügel 410,420, die über ein stegartiges Mittelteil 430 jeweils paarweise miteinander verbunden sind. Zwischen den stegartigen Mittelteilen 430 mit je zwei Flügeln 410,420 befindet sich das Maul 390, welches den Gestängeabschnitt 140 U- bzw. klauenartig übergreift. Der stegartige Mittelteil 430 fungiert dabei als die Schwenkbewegung der Klinke 400 begrenzender Anschlag. Die Flügel 410,420 besitzen ebenfalls Anschlagflächen 440 und Gleitflächen 450 wie die Klinken 110,120.

Ein aus den Gestängeabschnitten 140 mit Vorsprüngen 380 bestehendes Gestänge eignet sich in gleicher Weise wie das aus den leiterförmigen Gestängeabschnitten 140 bestehende Gestänge sowohl für den Schubbetrieb als auch für den Zugbetrieb (Fig. 10 bis 12). Der einzige Unterschied besteht darin, daß in diesem Falle die Klinken 400 jeweils nur zwei einander gegenüberliegende Anschlagflächen an dem stegartigen Mittelteil 430 und vier jeweils paarweise angeordnete, mit den Vorsprüngen 380 zusammenwirkende vordere Anschlagflächen 440 besitzen.

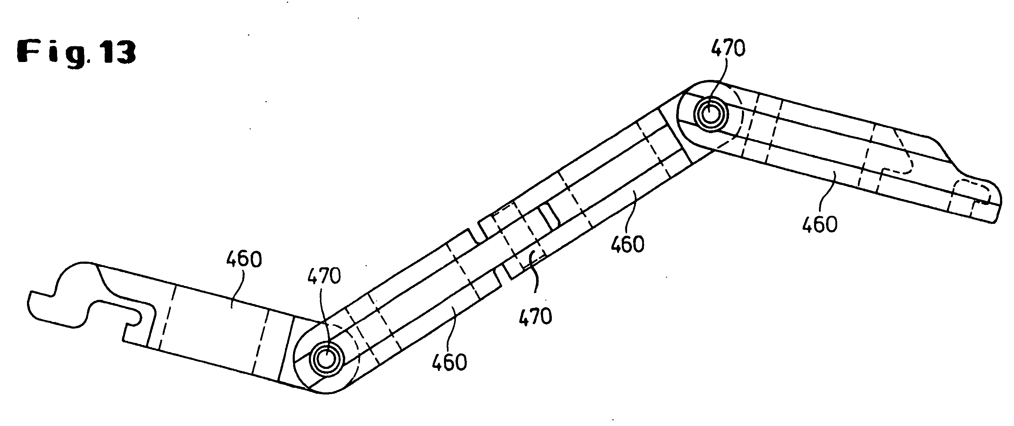

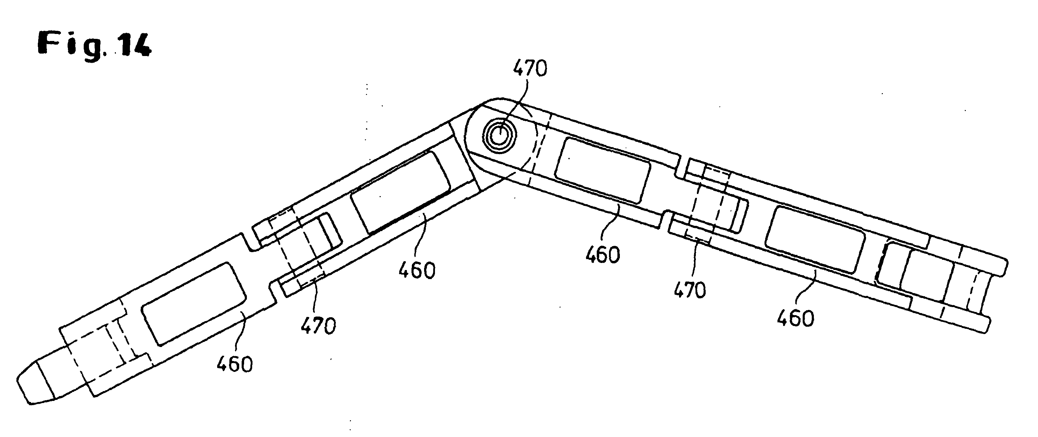

Für den Fall, daß die Gefahr einer zu starken Biegebeanspruchung des Gestänges besteht, kann das Gestänge entsprechend der Darstellung in den Fig. 13, 14 kardanisch ausgebildet sein. Der kardanische Teil des Gestänges besteht dann aus mindestens drei Gestängeabschnitten 460, die über jeweils in einem Winkel von 90° zueinander verlaufende Schwenkachsen 470 miteinander verbunden sind. Auf diese Weise ergibt sich eine kardanische Verbindung, die besonders geeignet ist für das Längsunterteilen einer im Erdreich verlegten Rohrleitung mit Hilfe eines Schneidscheibenwagens, dem ein gezogener Aufweitkopf nachgeordnet ist.

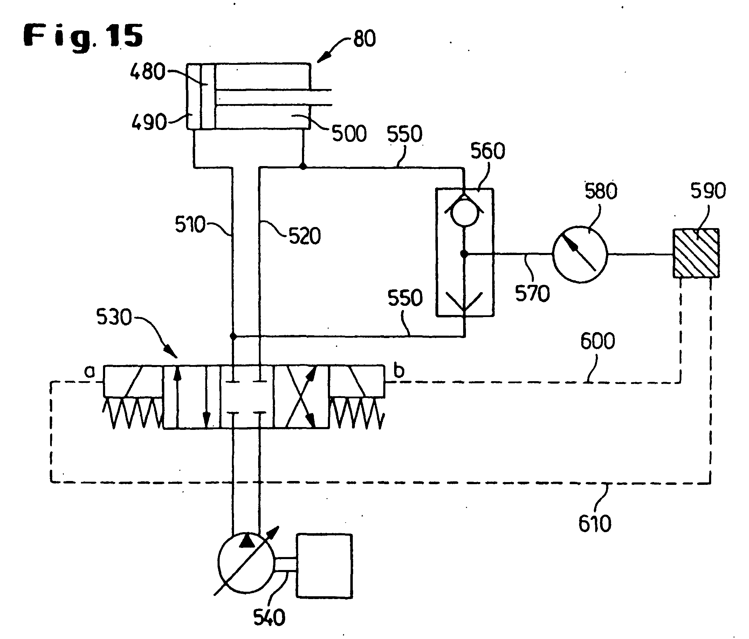

Der Vorschubwagen 90 ist gemäß Fig. 15 mit einem Linearmotor in Gestalt eines doppelt wirkenden Zylinders 80 mit einem Kolben 480 verbunden, dessen Zylinderräume 490,500 über zwei Hydraulikleitungen 510,520 mit einem 3/4-Wegeventil 530 mit einer Druckmittelquelle 540 verbunden sind. Von der Hydraulikleitung 520 führt eine Zweigleitung 550 über ein Wechselventil 560 zur Hydraulikleitung 510. Das Wechselventil 560 steht über eine Leitung 570 mit einem Manometer 580 in Verbindung mit einem Steuergerät 590, von dem aus zwei Steuerleitungen 600,610 zu dem 3/4-Wegeventil 530 führen.

Die in Fig. 15 dargestellte automatische Steuerung für den Vorschubwagen 90 arbeitet in der Weise, daß der kurz vor der Totpunktlage des Kolbens 480 in den beiden Zylinderräumen 490,500 stattfindende Druckanstieg mit Hilfe des Manometers 580 in ein Signal für das Steuergerät 590 umgesetzt wird, das sodann das 3/4-Wegeventil über die Leitungen 600,610 so umschaltet, daß der Zylinderraum, in dem der Druckanstieg stattfindet, mit Drucköl versorgt und der Kolben 480 seinen Weg in entgegengesetzte Richtung nimmt.

Das Kardangelenk-Gestänge der Fig. 13, 14 eignet sich besonders, wenn beispielsweise ein Schneidscheibenwagen 620 über ein Gestänge 460,470 mit einem nachgezogenen Aufweitkopf 630 verbunden ist, wie in der deutschen Patentanmeldung 198 31 190.7 beschrieben. Der Schneidscheibenwagen 620 ist mit drei in unterschiedlicher Höhe angeordneten Schneidscheiben 640,650,660 sowie mit diesen gegenüberliegenden Stützrollen 670,680,690 versehen. Der Aufweitkopf 630 dient zum Aufweiten eines von den Schneidrollen des Schneidwagens 620 in Längsrichtung geschlitzten, im Erdreich verlegten Leitungsrohrs 700 und ist über eine Gelenkkupplung 710 mit einem Nachziehrohr 720 verbunden, dessen vorderes Ende in eine mit dem Aufweitkopf verbundene kurze Schutzhülse 730 hineinragt.

Die erfindungsgemäße Vorrichtung erfordert lediglich eine Bedienungsperson zum Einlegen der einzelnen Gestängeabschnitte und zum Umlegen der Klinken im Falle einer Umkehr der Arbeitsrichtung des Gestänges; denn die Sperr- und die Vorschubklinke nehmen ihre Positionen am Ende jeder Vor- und Rückbewegung des automatisch gesteuerten Vorschubwagens von selbst ein. Die erfindungsgemäße Vorrichtung ist daher sowohl hinsichtlich ihrer Herstellungs- als auch hinsichtlich ihrer Betriebskosten außerordentlich wirtschaftlich.

## Patentansprüche

1. Vorrichtung zum Herstellen oder Aufweiten von Erdbohrungen und/oder zum Zertrümmem alter Rohrleitungen im Erdreich mit einem Linear-Antrieb (4; 80), einem damit in Antriebsverbindung stehenden Gestänge (14; 140), mit einem Aufweit- und/oder Zertrümmerungswerkzeug (13; 130) am Ende des Gestänges sowie einer ortsfesten Sperrklinke (32, 110) und einer mit dem Linear-Antrieb verbundenen Vorschub-Klinke (120), die jeweils abwechselnd am Gestänge angreifen, **gekennzeichnet durch** in Gestängeausnehmungen (360; 370) oder an Gestängevorsprüngen (380) angreifende, um eine Querachse (260) in zwei Arbeitspositionen verschwenkbare Vorschub-Klinke (120; 400) jeweils mit zwei Wirkrichtungen als Antriebsverbindungen.

2. Vorrichtung nach Anspruch 1, **dadurch gekennzeichnet, daß** die Vorschub- und Sperr-Klinken (110, 120; 400) mit Gleitflächen (340, 350; 450) versehen sind.

3. Vorrichtung nach einem der Ansprüche 1 bis 2, **dadurch gekennzeichnet, daß** die Vorschub- und Sperr-Klinken (110, 120; 400) einen Y-förmigen Querschnitt besitzen.

4. Vorrichtung nach einem der Ansprüche 1 bis 3, **dadurch gekennzeichnet, daß** das Gestänge aus einzelnen mit Spiel untereinander gekuppelten Abschnitten (140) besteht.

5. Vorrichtung nach einem der Ansprüche 1 bis 4, **dadurch gekennzeichnet, daß** der Linear-Antrieb in Gestalt eines doppelt wirkenden Zylinders (8, 80) angeordnet ist.

6. Vorrichtung nach Anspruch 5, **dadurch gekennzeichnet, daß** der Schlitten (9, 90) und/oder der Hydraulikzylinder (8, 80) mit Endschaltern zum Umsteuern des Hydraulikzylinders verbunden ist.

7. Vorrichtung nach Anspruch 6, **dadurch gekennzeichnet, daß** die Hydraulikleitungen (510, 520) zu den beiden Zylinderräumen (490, 500) des Hydraulikzylinders (80) über ein 3/4-Wegeventil (530) mit einer Druckmittelquelle (540) verbunden sind, und zwischen die Hydraulikleitungen über ein Wechselventil (560) mit einem den jeweils aktuellen Druck messenden Manometer (580) verbunden sind, das über ein Steuergerät (590) beim Erreichen des maximalen Drucks das 3/4-Wegeventil schaltet und dabei die eine oder die andere Hydraulikleitung mit der Druckquelle verbindet.

8. Vorrichtung nach einem der Ansprüche 1 bis 7, **dadurch gekennzeichnet, daß** das Werkzeug (13, 130) über eine gelenkige Verbindung (460, 470) mit einem gezogenen Aufweitkopf (630) verbunden ist.

9. Vorrichtung nach einem der Ansprüche 1 bis 8, **gekennzeichnet durch** ein Gestänge mit einer Gelenkverbindung aus mindestens drei Gestängeabschnitten (460), deren einander benachbarte Schwenkachsen (470) jeweils rechtwinklig zueinander verlaufen.

10. Vorrichtung nach einem der Ansprüche 1 bis 8, **dadurch gekennzeichnet, daß** die Klinken (110, 120; 40) automatisch verschwenkbar sind.

11. Vorrichtung nach einem der Ansprüche 1 bis 10, **gekennzeichnet durch** für ein Leitergestänge (14) mit mindestens drei Gestängeabschnitte (40), deren benachbarte Schwenkachsen (41) jeweils rechtwinklig zueinander verlaufen.

12. Verfahren zum Herstellen oder Aufweiten von Erdbohrung und/oder zum Zertrümmern oder Erneuern von Rohrleitungen im Erdreich unter Verwendung eines mit Hilfe eines Kupplungsmittels angetriebenen leiterartigen Gestänges, wobei das Gestänge (14) in das Erdreich eingetrieben oder herausgezogen wird, indem dieses mit ersten Kupplungsmitteln verbunden und mittels der Kupplungsmittel in das Erdreich eingeschoben oder herausgezogen wird, zweite Kupplungsmittel mit dem Gestänge verbunden werden, die ersten Kupplungsmittel in ihre Ursprungsposition zurückgefahren und wieder mit dem Gestänge verbunden werden, woraufhin die zweiten Kupplungsmittel wieder gelöst werden, **dadurch gekennzeichnet, daß** durch das Schwenken mindestens des ersten Kupplungsmittels um eine quergerichtete Achse die Wirkrichtung der Kupplung verkehrt wird.

13. Verfahren nach Anspruch 12, **dadurch gekennzeichnet, daß** das Schwenken der Kupplungsmittel automatisch erfolgt.

14. Verfahren nach Anspruch 12 oder 13, **gekennzeichnet durch** die Verwendung einer Fernsteuerung.

## Claims

1. Device for making or expanding underground bores and/or for shattering old pipelines in the ground, having a linear drive (4; 80), a rod assembly (14; 140) in driving connection with said linear drive, with an expanding and/or shattering tool (13, 130) on the end of the rod assembly and a locally fixed blocking ratchet (32, 110) and a push ratchet (120) linked to the linear drive, which alternately engage with the rod assembly, **characterised in that** the push ratchet (120; 400) engages in rod recesses (360; 370) or on rod projections (380) and is pivotable about a transverse axis (260) into two working positions, each with two working directions as driving connections.

2. Device according to claim 1, **characterised in that** the push and blocking ratchets (110, 120; 400) are provided with sliding surfaces (340; 350; 450).

3. Device according to one of the claims 1 to 2, **characterised in that** the push and blocking ratchets (110, 120; 400) have a Y-shaped cross-section.

4. Device according to one of the claims 1 to 3, **characterised in that** the rod assembly comprises individual sections (140) mutually coupled with play.

5. Device according to one of the claims 1 to 4, **characterised in that** the linear drive is arranged in the form of a double-acting cylinder (8, 80).

6. Device according to claim 5, **characterised in that** the sled (9, 90) and/or the hydraulic cylinder (8, 80) is linked to end switches for reversing the hydraulic cylinder.

7. Device according to claim 6, **characterised in that** the hydraulic lines (510, 520) to the two cylinder chambers (490, 500) of the hydraulic cylinder (80) are linked via a 3/4-way valve (530) to a source of pressure medium (540) and between the hydraulic lines are connected via a changeover valve (560) to a manometer (580) measuring the actual pressure, which on reaching the maximum pressure, switches the 3/4-way valve via a control device (590) and thereby links the one or other hydraulic line to the pressure source.

8. Device according to one of the claims 1 to 7, **characterised in that** the tool (13, 130) is linked via an articulated connection (460, 470) to a drawn expansion head (630).

9. Device according to one of the claims 1 to 8, **characterised in that** it has a rod assembly with an articulated connection comprising at least three rod sections (460) whose mutually adjacent pivot axes (470) respectively run mutually perpendicular.

10. Device according to one of the claims 1 to 8, **characterised in that** the latches (110, 120; 40) are automatically pivotable.

11. Device according to one of the claims 1 to 10, **characterised in that** it has a ladder-like rod assembly (14) with at least three rod sections (40) whose adjoining pivot axes (41) run perpendicular to each other.

12. Method for making or expanding underground bores and/or for shattering or renovating pipelines in the ground using a ladder-like rod assembly driven with the aid of a coupling means, whereby the rod assembly (14) is driven into or pulled out of the ground in that said rod assembly is linked with first coupling means and is pushed into or pulled out of the ground with the coupling means, second coupling means are connected to the rod assembly, the first coupling means are moved back into their original position and are linked again to the rod assembly, whereupon the second coupling means are released again, **characterised in that** by means of the pivoting of at least the first coupling means about a transversely oriented axis, the direction of action of the coupling is reversed.

13. Method according to claim 12, **characterised in that** the pivoting of the coupling means takes place automatically.

14. Method according to claim 12 or 13, **characterised by** the use of a remote control.

## Revendications

1. Dispositif pour réaliser ou élargir des forages terrestres et/ou pour détruire de vieilles tuyauteries situées dans le sol, avec un entraînement linéaire (4 ; 80), une tringlerie (14 ; 140) lui étant reliée en entraînement, avec un outil d'élargissement et/ou de destruction (13 ; 130) placé à l'extrémité de la tringlerie, ainsi qu'un cliquet de blocage (33, 110) localement fixe et un cliquet d'avancement (120) relié à l'entraînement linéaire, qui agissent chacun de façon alternée sur la tringlerie, **caractérisé par** des cliquets d'avancement (120 ; 400) susceptibles de pivoter en deux positions de travail autour d'un axe transversal (260), s'engageant dans des évidements de tringlerie (360 ; 370) ou sur des saillies de tringlerie (380), avec chaque fois deux sens d'action, en tant que liaisons d'entraînement.

2. Dispositif selon la revendication 1, **caractérisé en ce que** les cliquets d'avancement et de blocage (110, 120 ; 400) sont munis de faces de glissement (340, 350; 450).

3. Dispositif selon l'une des revendications 1 à 2, **caractérisé en ce que** les cliquets d'avancement et de blocage (110, 120 ; 400) ont une section transversale en forme de Y.

4. Dispositif selon l'une des revendications 1 à 3, **caractérisé en ce que** la tringlerie est formée de tronçons (140) individuels, couplés entre eux avec du jeu.

5. Dispositif selon l'une des revendications 1 à 4, **caractérisé en ce que** l'entraînement linéaire est disposé sous la forme d'un vérin (8, 80) à double action.

6. Dispositif selon la revendication 5, **caractérisé en ce que** le chariot (9, 90) et/ou le vérin hydraulique (8, 80) sont reliés/est relié à des interrupteurs de fin de course, pour assurer l'inversion de marche du vérin hydraulique.

7. Dispositif selon la revendication 6, **caractérisé en ce que** les conduites hydrauliques (510, 520) allant aux deux enceintes de cylindre (490, 500), du vérin hydraulique (80), sont reliées à une source de fluide sous pression (540)par l'intermédiaire d'une soupape multivoie de type 3/4 (530), et sont reliées, entre les conduites hydrauliques, par une soupape à deux voies (560), à un manomètre (580) mesurant chaque fois la pression réelle, manomètre qui, par l'intermédiaire d'un appareil de commande (590), à l'atteinte de la pression maximale, commute la soupape multivoie 3/4 et relie alors une ou l'autre conduite hydraulique à la source de pression.

8. Dispositif selon l'une des revendications 1 à 7, **caractérisé en ce que** l'outil (13, 130) est relié à une tête d'élargissement (630) tractée, par l'intermédiaire d'une liaison (160, 470) articulée.

9. Dispositif selon l'une des revendications 1 à 8, **caractérisé par** une tringlerie munie d'une liaison articulée, formée d'au moins trois tronçons de tringlerie (460), dont les axes de pivotement (470) voisins les uns des autres s'étendent chacun à angle droit les uns des autres.

10. Dispositif selon l'une des revendications 1 à 8, **caractérisé en ce que** les cliquets (110, 120, 400) sont susceptibles d'être pivotés automatiquement.

11. Dispositif selon l'une des revendications 1 à 10, **caractérisé par** une tringlerie en forme d'échelle (14), ayant au moins trois tronçons de tringlerie (40) dont des axes de pivotement (41) voisins s'étendent chaque fois à angle droit les uns des autres.

12. Procédé de réalisation ou d'élargissement d'un forage terrestre et/ou de destruction ou de remplacement de tuyauteries dans le sol, avec utilisation d'une tringlerie en forme d'échelle, entraînée à l'aide d'un moyen d'accouplement, la tringlerie (14) étant enfoncée dans le sol ou extraite du sol, par le fait que celle-ci est reliée à des premiers moyens d'accouplement et enfoncée dans le sol ou extraite du sol à l'aide des moyens d'accouplement, des deuxièmes moyens d'accouplement étant reliés à la tringlerie, les premiers moyens d'accouplement étant rétractés à leur position initiale et, de nouveau, reliés à la tringlerie, suite à quoi les deuxièmes moyens d'accouplement sont de nouveau désolidarisés, **caractérisé en ce que**, par un pivotement, au moins du premier moyen d'accouplement, autour d'un axe orienté transversalement, on inverse le sens d'action de l'accouplement.

13. Procédé selon la revendication 12, **caractérisé en ce que** le pivotement des moyens d'accouplement se fait de façon automatique.

14. Procédé selon la revendication 12 ou 13, **caractérisé par** l'utilisation d'une télécommande.
